# EUROPEAN PATENT SPECIFICATION

(11) **EP 2 282 597 B1**
(45) Date of publication and mention of the grant of the patent: **19.09.2012**
(21) Application number: 10007330.3
(22) Date of filing: 15.07.2010
(51) Int. Cl.: H04W 74/00, H04W 72/12

(54) **Method and device for scheduling request**
Verfahren und Vorrichtung zur Anfrageplanung
Procédé et dispositif pour planifier une requête

(30) Priority: 23.07.2009 US 228148 P
(43) Date of publication of application: 09.02.2011
(73) Proprietor: Innovative Sonic Corporation, Taipei City (TW)
(72) Inventor: Tseng, Li-Chih, Peitou Taipei City (TW)
(74) Representative: Görz, Ingo

(56) References cited:
- "LTE; Evolved Universal Terrestrial Radio Access (E-UTRA); Medium Access Control (MAC) protocol specification (3GPP TS 36.321 version 8.6.0 Release 8)" TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, no. V8.6.0, 1 July 2009 (2009-07-01), XP014044756
- "LTE; Evolved Universal Terrestrial Radio Access (E-UTRA); Physical layer procedures (3GPP TS 36.213 version 8.7.0 Release 8)" TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, no. V8.7.0, 1 June 2009 (2009-06-01), XP014044750
- ERICSSON: "SR triggering in relation to uplink grants" 3GPP DRAFT; R2-081468, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Shenzhen, China; 20080325, 25 March 2008 (2008-03-25), XP050139212 [retrieved on 2008-03-25]
- ERICSSON ET AL: "D-SR failure handling" 3GPP DRAFT; R2-085388 (HANDLING OF D-SR REPETITIONS), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Prague, Czech Republic; 20080923, 23 September 2008 (2008-09-23), XP050320232 [retrieved on 2008-09-23]

## Description

The present invention relates to a method and apparatus for performing Scheduling Request in a user equipment (UE) of a wireless communication system according to the precharacterizing clauses of claims 1 and 9.

Long Term Evolution wireless communication system (LTE system), as defined in ETSI TS 136 321 V8.6.0 and ETSI TS 136 213 V8.7.0, an advanced high-speed wireless communication system established upon the 3G mobile telecommunication system, supports only packet-switched transmission, and tends to implement both Medium Access Control (MAC) layer and Radio Link Control (RLC) layer in one single communication site, such as in base stations (Node Bs) alone rather than in Node Bs and RNC (Radio Network Controller) respectively, so that the system structure becomes simple.

In LTE system, the network, such as an evolved Node B (eNB), performs radio resource allocation to provide user equipments (UEs) with resources for uplink or downlink data transfer. There are two kinds of resource allocations: dynamic resource allocation and pre-configured resource allocation. For the pre-configured resource allocation, the network allocates resource to the UEs by Radio Resource Control (RRC) signaling, and allows the UEs periodically transmitting a certain amount of data, for example, voice data. That means, at periodic time intervals, the UEs can utilize the pre-configured radio resources for data transmission or reception, to achieve data exchange with the network. On the other hand, for the dynamic resource allocation, the network dynamically allocates radio resources to the UEs depending on UE number of the cell area, traffic volume and quality of service (QoS) requirements of each UE, and the UE has to monitor a physical downlink control channel (PDCCH) to find possible allocation of dynamic resources for both downlink and uplink transmission.

For the dynamic resource allocation, when the UE has new uplink data to transmit and there is no Uplink Shared Channel (UL-SCH) resource available, the UE shall trigger a Scheduling Request (SR) procedure to request the network to allocate uplink transmission resources. In such a situation, if the UE has configured Physical Uplink Control Channel (PUCCH) resources, the SR procedure is performed via PUCCH signaling. Otherwise, such as the UE has no configured PUCCH resources or the configured PUCCH resources are invalid, for example, the SR procedure is then performed via a Random Access Procedure. Since the PUCCH resources are dedicated transmission resources, the SR message transmitted on PUCCH is referred to as a Dedicated Scheduling Request (D-SR) message, while the SR message transmitted via the Random Access procedure is referred to as a Random Access Scheduling Request (RA-SR) message.

If the UE has a configured PUCCH resource after an SR is triggered, the UE shall periodically transmit a D-SR message on PUCCH until the SR is cancelled. Note that the SR is cancelled when an uplink transmission resource for a new transmission is received or the number of D-SR transmissions reaches to a pre-defined parameter DSR_TRANS_MAX. When the number of D-SR transmissions reaches to the pre-defined parameter DSR_TRANS_MAX, it indicates uplink transmission of the UE may have some problem, such as the PUCCH resources for SR become invalid (probably due to poor signal quality or improper power settings) or the UE loses synchronization on uplink timing, and thus the D-SR messages sent by the UE cannot be successfully received by the network. In this case, the UE shall stop the D-SR transmission, and trigger a Random Access procedure to transmit the SR message instead.

According to current specifications, a minimum periodicity for sending SR on PUCCH is 5ms. It means that UE can send an SR on PUCCH every 5ms. In this case, the average waiting time required by the UE for sending SR on PUCCH is 2.5 ms. For the growing demands on real-time communication services, the waiting time may be too long. Thus, it has been proposed by the industry to consider having a shorter periodicity like 2 or 3ms. However, when the periodicity is shorter than the time expenditure the eNB requires to handle the SR message or shorter than packet Round Trip Time (RTT), some of the SR transmission is redundant, and causes unnecessary power waste of the UE.

This in mind, the present invention aims at providing a method and apparatus for performing Scheduling Request in a user equipment (UE) of a wireless communication system to reduce unnecessary Scheduling Request transmission when the Scheduling Request is sent in a short periodicity, such that power consumption can be saved.

This is achieved by a method and apparatus for performing Scheduling Request (SR) in a user equipment (UE) of a wireless communication system according to claims 1 and 9. The dependent claims pertain to corresponding further developments and improvements.

As will be seen more clearly from the detailed description following below, the claimed method for performing Scheduling Request (SR) in a user equipment (UE) of a wireless communication system includes steps of triggering an SR; sending an SR message on a Physical Uplink Control Channel (PUCCH) when the UE has a configured PUCCH resource; and skipping a plurality of transmission opportunities for sending the SR message after the SR message is sent.

In the following, the invention is further illustrated by way of example, taking reference to the accompanying drawings. Thereof
FIG. 1 is a schematic diagram of a wireless communications system.
FIG.2 is a function block diagram of a wireless communications device.
FIG.3 is a diagram of a program code of FIG.2.
FIG.4 is a flowchart of a process according to an embodiment of the present invention.
FIG.5 is an operational diagram of the process of FIG.4 according to the embodiment of the present invention.

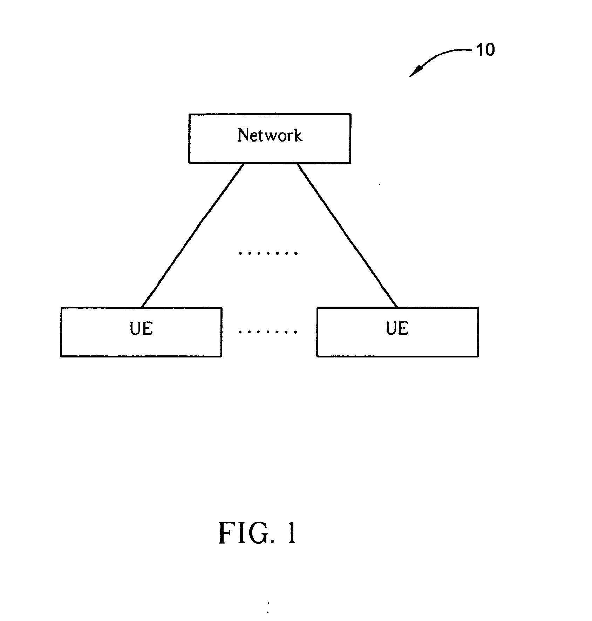

Please refer to FIG. 1, which illustrates a schematic diagram of a wireless communications system 10. The wireless communications system 10 is preferred to be a Long Term Evolution (LTE) system, and is briefly composed of a network and a plurality of user equipments (UEs). In FIG. 1, the network and the UEs are simply utilized for illustrating the structure of the wireless communications system 10. Practically, the network may comprise a plurality of base stations (Node Bs), radio network controllers and so on according to actual demands, and the UEs can be devices such as mobile phones, computer systems, etc.

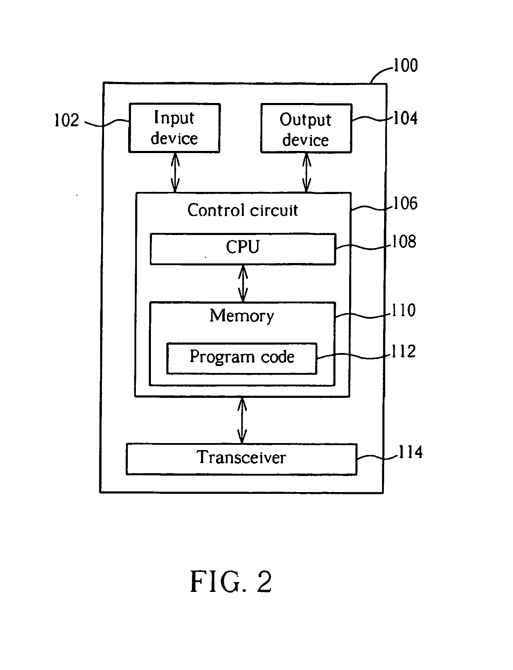

Please refer to FIG.2, which is a functional block diagram of a communications device 100 in a wireless communications system. The communications device 100 can be utilized for realizing the UEs in FIG.1, and the wireless communications system is preferably the LTE system. For the sake of brevity, FIG.2 only shows an input device 102, an output device 104, a control circuit 106, a central processing unit (CPU) 108, a memory 110, a program 112, and a transceiver 114 of the communications device 100. In the communications device 100, the control circuit 106 executes the program 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3.

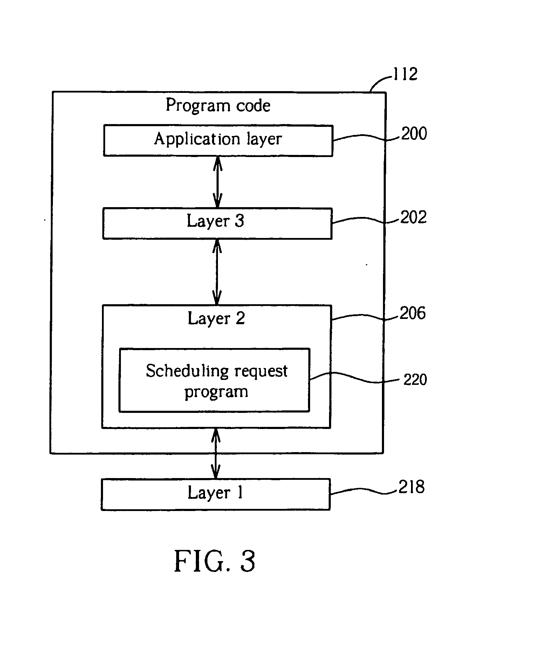

Please continue to refer to FIG.3. FIG.3 is a schematic diagram of the program 112 shown in FIG.2. The program 112 includes an application layer 200, a Layer 3 202, and a Layer 2 206, and is coupled to a Layer 1 218. The Layer 3 202 is used for performing resource control. The Layer 2 includes a Radio Link Control (RLC) layer and a Medium Access Control (MAC) layer, and is used for performing link control. The Layer 1 218 is used for performing physical connection.

In LTE system, when the UE has new uplink data to transmit such as uplink data arrives to a transmission buffer of the UE, for example, and there is no Uplink Shared Channel (UL-SCH) resource available, the UE would trigger a Scheduling Request (SR) procedure to request the network to allocate uplink transmission resources, such that the uplink data can be transmitted. Under such a situation, the embodiment of the present invention provides a scheduling request program 220 in the program 112 for avoiding unnecessary transmission of scheduling request messages and saving UE power consumption.

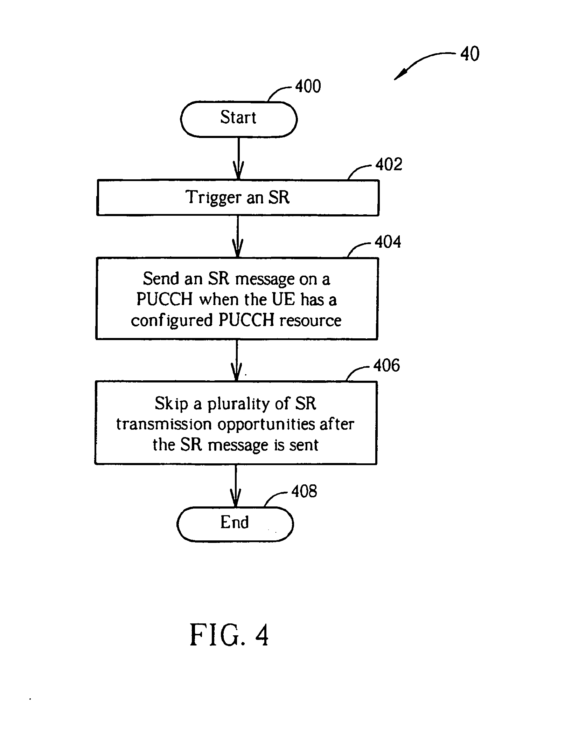

Please refer to FIG.4, which illustrates a schematic diagram of a process 40 according to an embodiment of the present invention. The process 40 is utilized for performing Scheduling Request (SR) in a UE of a wireless communication system, and can be compiled into the scheduling request program 220. The process 40 includes the following steps:
Step 400: Start.
Step 402: Trigger an SR.
Step 404: Send an SR message on a Physical Uplink Control Channel (PUCCH) when the UE has a configured PUCCH resource.
Step 406: Skip a plurality of SR transmission opportunities after the SR message is sent.
Step 408: End.

According to the process 40, after the SR is triggered, if the UE has configured PUCCH resources, the UE sends an SR message on PUCCH. After the SR message is sent, the UE then skips a plurality of transmission opportunities for sending the SR message. In this case, even a short SR periodicity is used by the UE to transmit the SR message, since the plurality of SR transmission opportunities is skipped each time after the SR message is sent, the embodiment of the present invention is able to reduce unnecessary transmission of the SR message, while the average waiting time for sending the SR message can still be shortened.

If the SR is still pending (i.e. not being cancelled) after the plurality of transmission opportunities is skipped, the UE shall keep on sending the SR message at a next transmission opportunity. Note that the SR is cancelled when an uplink transmission resource for a new transmission is received or the number of times the SR message is sent reaches to a pre-defined parameter DSR_TRANS_MAX.

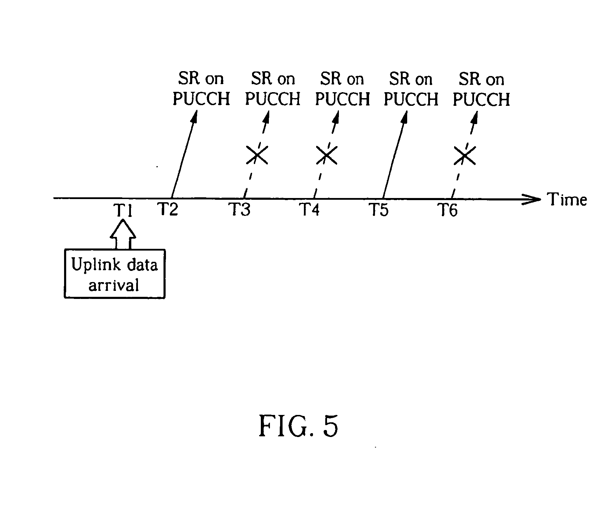

For example, please refer to FIG.5. FIG.5 is an operational diagram of the process 40 according to the embodiment of the present invention. Assume that an SR is triggered due to uplink data arrival at a timing point T1. If the UE has configured PUCCH resources, transmission opportunities for the UE to send an SR message would be periodically formed on PUCCH (timing points T2 - T6). The time interval between each transmission opportunity is configured according to periodicity of the PUCCH resource, which can be 1 ms to 4 ms but is not limited to these. In the beginning, the UE sends the SR message at a first transmission opportunity (i.e. at the timing point T2). Then, based on the process 40, the UE skips a plurality of transmission opportunities, such as two transmission opportunities in this case, for example. If the SR is still pending after the plurality of transmission opportunities is skipped, the UE then sends the SR message again at a next transmission opportunity (i.e. at the timing point T5). And, the UE repeats in this manner until the SR is cancelled.

In the present invention, since the plurality of follow-up transmission opportunity is skipped by the UE each time after the SR message is sent, the UE is able to avoid unnecessary transmissions of the SR message till receiving response from the network, so that the power consumption can be saved. Accordingly, the short SR periodicity can still be used by the UE, and thus the average waiting time required by the UE for sending the SR message (i.e. the time interval between the timing points T1 and T2) can be significantly shortened as well.

It is worth noting that appropriate modifications or alternations can be certainly made by those skilled in the art according to practical demands, which all belong to the scope of the present invention. For example, the way that the UE skips the plurality of opportunity can be controlled by a counter or a timer, which is also not restricted by this.

As mentioned above, the embodiment of the present invention provides a method and apparatus for performing scheduling request to avoid unnecessary transmission of the SR message when the UE uses the short SR periodicity, such that power consumption can be saved.

## Claims

1. A method for performing Scheduling Request, named SR hereinafter, in a user equipment, named UE hereinafter, of a wireless communication system, the method comprises:
triggering an SR (402);
forming transmission opportunities for the UE to send an SR message periodically on a Physical Uplink Control Channel, named PUCCH hereinafter, wherein the time interval between each transmission opportunity is configured according to the periodicity of the PUCCH resource, and
sending an SR message on PUCCH at a first transmission opportunity, when the UE has a configured PUCCH resource (404); and
**characterized by** skipping a plurality of transmission opportunities for sending the SR message again after the SR message is sent (406).

2. The method of claim 1, **characterized in that** the SR is triggered when uplink data arrives to a transmission buffer of the UE and there is no uplink transmission resource available.

3. The method of claim 1 or 2, **characterized in that** the method further comprises:
keeping on sending the SR message at a next transmission opportunity after the plurality of skipped transmission opportunities when the SR is yet not cancelled.

4. The method of claim 3, **characterized in that** the SR is cancelled when the UE receives an uplink transmission resource allocated to a new transmission.

5. The method of claim 4, **characterized in that** the uplink transmission resource is an Uplink Shared Channel, named UL-SCH hereinafter, resource.

6. The method of any one of claims 3 to 5, **characterized in that** the SR is cancelled when the number of times that the SR message is sent reaches to a pre-defined number.

7. The method of any one of claims 1 to 6, **characterized in that** the number of the plurality of transmission opportunities is determined by a timer.

8. The method of any one of claims 1 to 7, **characterized in that** the number of the plurality of transmission opportunities is determined by a counter.

9. A communication device (100) for performing Scheduling Request, named SR hereinafter, in a user equipment, named UE hereinafter, of a wireless communication system, the communication device (100) comprising:
a processor (108) for executing a program code (112); and
a memory (110) coupled to the processor (108) for storing the program code (112); the program code (112) is adapted to perform the method steps as defined in any one of the preceding claims when being executed by the processor (108).

## Patentansprüche

1. Verfahren zum Ausführen einer Terminierungsanfrage bzw. eines Scheduling Request, nachfolgend SR genannt, in einem Nutzergerät bzw. User Equipment, nachfolgend UE genannt, eines drahtlosen Kommunikationssystems, wobei das Verfahren folgende Schritte aufweist:
Triggern eines SR (402);
Bilden von Übertragungsmöglichkeiten für das UE, um anschließend periodisch eine SR-Nachricht auf einem physikalischen Uplink-Steuerungskanal bzw. Physikal Uplink Control Channel, nachfolgend PUCCH genannt, zu senden, wobei das Zeitintervall zwischen jeder Übertragungsmöglichkeit gemäß der Periodizität der PUCCH-Ressource konfiguriert wird, und
Senden einer SR-Nachricht auf dem PUCCH bei einer ersten Übertragungsmöglichkeit, wenn das UE eine konfigurierte PUCCH-Ressource (404) aufweist; und
**gekennzeichnet ist durch** Überspringen einer Mehrzahl von Übertragungsmöglichkeiten zum erneuten Senden der SR-Nachricht, nachdem die SR-Nachricht gesendet wurde (406).

2. Verfahren nach Anspruch 1, **dadurch gekennzeichnet, dass** der SR getriggert wird, wenn Uplink-Daten in einem Übertragungspuffer des UE ankommen und keine Uplink-Übertragungsressource verfügbar ist.

3. Verfahren nach Anspruch 1 oder 2, **dadurch gekennzeichnet dass** das Verfahren ferner aufweist:
weiteres Senden der SR-Nachricht bei einer nächsten Übertragungsmöglichkeit nach der Mehrzahl der übersprungenen Übertragungsmöglichkeiten, wenn der SR noch nicht storniert wurde.

4. Verfahren nach Anspruch 3, **dadurch gekennzeichnet, dass** der SR storniert wird, wenn das UE eine Uplink-Übertragungsressource empfängt, die einer neuen Übertragung zugewiesen ist.

5. Verfahren nach Anspruch 4, **dadurch gekennzeichnet, dass** die Uplink-Übertragungsressource eine Uplink-Shared-Channel-, nachfolgend UL-SCH genannt, Ressource ist.

6. Verfahren nach einem der Ansprüche 3 bis 5, **dadurch gekennzeichnet, dass** der SR storniert wird, wenn die Anzahl, wie oft die SR-Nachricht gesendet wurde, eine vordefinierte Anzahl erreicht.

7. Verfahren nach einem der Ansprüche 1 bis 6, **dadurch gekennzeichnet, dass** die Anzahl der Mehrzahl von Übertragungsmöglichkeiten von einem Timer bestimmt wird.

8. Verfahren nach einem der Ansprüche 1 bis 7, **dadurch gekennzeichnet, dass** die Anzahl der Mehrzahl von Übertragungsmöglichkeiten von einem Zähler bestimmt wird.

9. Kommunikationsvorrichtung (100) zum Ausführen einer Terminierungsanfrage bzw. eines Scheduling Request, nachfolgend SR genannt, in einem Nutzergerät bzw. User Equipment, nachfolgend UE genannt, eines drahtlosen Kommunikationssystems, wobei die Kommunikationsvorrichtung aufweist:
einen Prozessor (108) zum Ausführen eines Programmcodes (112); und
einen Speicher (110), der mit dem Prozessor (108) verbunden ist zum Speichern des Programmcodes (112); wobei der Programmcode (112) angepasst ist, um die Verfahrensschritte gemäß einem der vorhergehenden Ansprüche auszuführen, wenn dieser vom Prozessor (108) ausgeführt wird.

## Revendications

1. Procédé pour réaliser une demande d'ordonnancement, appelée SR (« Scheduling Request ») ci-après, dans un équipement utilisateur, appelé UE (« User Equipment ») ci-après, d'un système de communication sans fil, le procédé comprend :
le déclenchement d'une SR (402) ;
la formation de possibilités de transmission pour que l'UE envoie un message de SR périodiquement sur un canal de signalisation de liaison montante physique, appelé PUCCH (« Physical Uplink Control Channel ») ci-après, dans lequel l'intervalle de temps entre chaque possibilité de transmission est configuré selon la périodicité de la ressource de PUCCH, et
l'envoi d'un message de SR sur le PUCCH à une première possibilité de transmission, lorsque l'UE comporte une ressource de PUCCH configurée (404) ; et
**caractérisé par** le saut d'une pluralité de possibilités de transmission pour envoyer le message de SR à nouveau après que le message de SR est envoyé (406).

2. Procédé selon la revendication 1, **caractérisé en ce que** la SR est déclenchée lorsque des données de liaison montante arrivent à une mémoire tampon de transmission de l'UE et aucune ressource de transmission de liaison montante n'est disponible.

3. Procédé selon la revendication 1 ou 2, **caractérisé en ce que** le procédé comprend en outre :
la continuation de l'envoi du message de SR à une possibilité de transmission suivante après la pluralité de possibilités de transmission sautées lorsque la SR n'est pas encore annulée.

4. Procédé selon la revendication 3, **caractérisé en ce que** la SR est annulée lorsque l'UE reçoit une ressource de transmission de liaison montante attribuée à une nouvelle transmission.

5. Procédé selon la revendication 4, **caractérisé en ce que** la ressource de transmission de liaison montante est une ressource d'un canal partagé de liaison montante, appelé UL-SCH (« UpLink Shared Channel ») ci-après.

6. Procédé selon l'une quelconque des revendications 3 à 5, **caractérisé en ce que** la SR est annulée lorsque le nombre de fois que le message de SR est envoyé atteint un nombre prédéfini.

7. Procédé selon l'une quelconque des revendications 1 à 6, **caractérisé en ce que** le nombre de la pluralité de possibilités de transmission est déterminé par une minuterie.

8. Procédé selon l'une quelconque des revendications 1 à 7, **caractérisé en ce que** le nombre de la pluralité de possibilités de transmission est déterminé par un compteur.

9. Dispositif de communication (100) pour réaliser une demande d'ordonnancement, appelée SR (« Scheduling Request ») ci-après, dans un équipement utilisateur, appelé UE (« User Equipment ») ci-après, d'un système de communication sans fil, le dispositif de communication (100) comprenant :
un processeur (108) pour exécuter un code de programme (112) ; et
une mémoire (110) couplée au processeur (108) pour stocker le code de programme (112) ; le code de programme (112) est adapté pour réaliser les étapes de procédé selon l'une quelconque des revendications précédentes lorsqu'il est exécuté par le processeur (108).
